(19) Europäisches Patentamt

European Patent Office

Office européen des brevets

(11) Veröffentlichungsnummer: **0 347 510**

**A1**

(12) # EUROPÄISCHE PATENTANMELDUNG

(21) Anmeldenummer: 88810439.5

(51) Int. Cl.4: **A61C 13/235**

(22) Anmeldetag: 24.06.88

(43) Veröffentlichungstag der Anmeldung:
27.12.89 Patentblatt 89/52

(84) Benannte Vertragsstaaten:
AT BE CH DE ES FR GB GR IT LI LU NL SE

(71) Anmelder: **CENDRES ET METAUX S.A.**
**122, route de Boujean**
**CH-2501 Bienne(CH)**

(72) Erfinder: **Wegmueller, Hugo**
**Schwadernauweg 5**
**CH-2504 Biel(CH)**

(74) Vertreter: **Seehof, Michel et al**
**c/o AMMANN PATENTANWAELTE AG BERN**
**Schwarztorstrasse 31**
**CH-3001 Bern(CH)**

(54) **Zahnprothese und Anker mit magnetischen Verbindungsteilen.**

(57) In der Zahnprothese (1) ist ein Magnetgehäuse (2) mit einem Permanentmagneten (3) eingelassen, der mit der Oberfläche des Ankers (6) zusammenwirkt, um die Prothese festzuhalten. Um eine Korrosion von Teilen des Ankers zu vermeiden, sind alle Teile des Ankers, die mit dem Gewebe im Kiefer in Berührung kommen, aus einem biokompatiblen Material hergestellt. Der Schaft (13) und der Kopf (14) des Ankers (6) sind aus Titan gefertigt und im Kopf (14) ist ein Einsatz (18) aus rostfreiem Stahl eingepresst, der als Gegenpol zum Permanentmagneten dient.

Durch obige Anordnung kommt die korrosionsanfällige Stahllegierung, die als Gegenpol zum Magneten notwendig ist, nicht mit dem Gewebe im Kiefer in Berührung.

FIG.2

EP 0 347 510 A1

## Zahnprothese und Anker mit magnetischen Verbindungsteilen

Die vorliegende Erfindung bezieht sich auf eine Zahnprothese und Anker mit einen Permanentmagneten enthaltende Verbindungteile, wobei der Permanentmagnet in einem Magnetgehäuse in der Prothese angeordnet ist und der im Kiefer einsetzbare Anker eine Oberfläche aufweist, die vom Permanentmagneten angezogen wird.

Eine solche Einheit mit magnetischer Verbindung ist beispielsweise aus der US-A-4 431 419 bekannt, in welcher der Anker im wesentlichen aus einer Schraube besteht, dessen Kopf aus ferromagnetischem rostfreien Stahl besteht. Bei diesem Stand der Technik wird auch die Schraube implantiert, d.h. sie steht in direkter Verbindung mit dem umliegenden Gewebe, so dass erhebliche Korrosionsgefahr besteht. Das gleiche gilt auch bei dem Verankerungssystem gemäss US-A-4 214 366, dessen Stift zwar aus Titan bestehen kann jedoch die Kappe auch aus einem ferromagnetischen Material besteht, das korrosionsanfällig ist. Ausserdem besteht eine erhöhte Korrosionsgefahr an der Uebergangsstelle zwischen dem ferromagnetischen Material und dem Verankerungsteil.

Es ist von diesem Stand der Technik ausgehend Aufgabe der vorliegenden Erfindung den Anker des Prothesen-Ankersystems mit magnetischer Verbindung derart zu gestalten, dass keine Korrosionsgefahr besteht. Die Aufgabe wird mit einer Prothese und Anker gemäss den Patentansprüchen gelöst.

Die Erfindung wird im folgenden anhand einer Zeichnung von Ausführungsbeispielen näher erläutert.

Fig. 1 zeigt im Schnitt und schematisch einen Teil einer Prothese mit dem implantierten Anker und dem magnetischen Verbindungssystem,

Fig. 2 zeigt im Schnitt ein Ausführungsbeispiel eines Ankers und des magnetischen Verbindungssystems und

Fig. 3 zeigt im Schnitt ein zweites Ausführungsbeispiel.

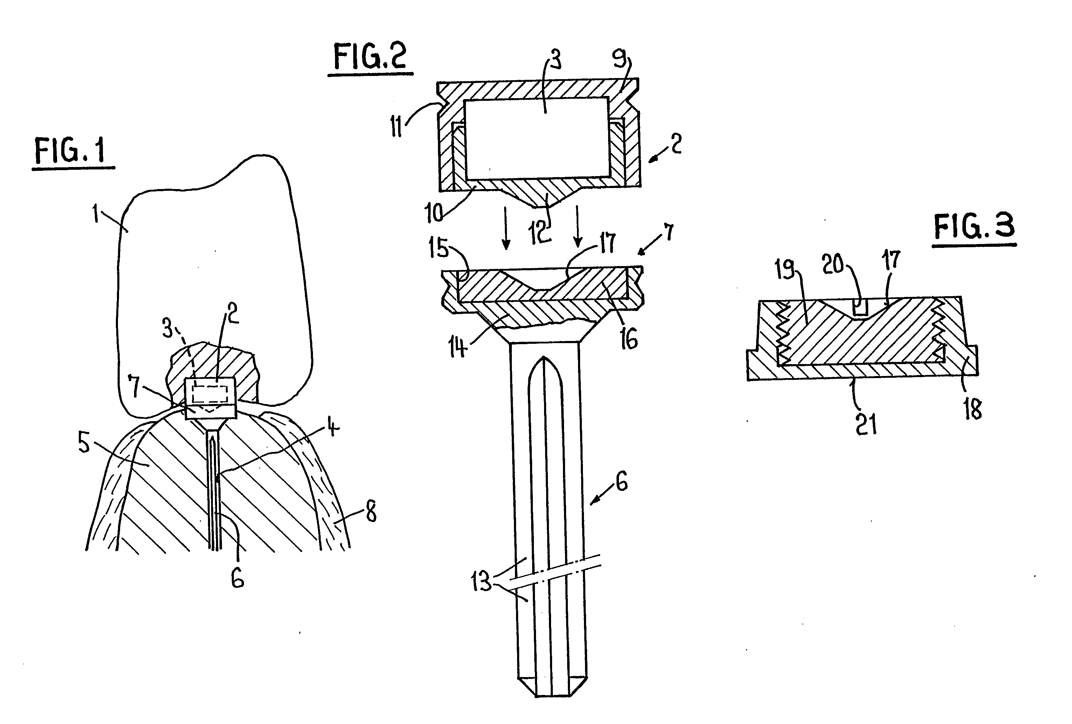

In Figur 1 erkennt man die schematisch angedeutete Prothese 1, das in der Prothese verankerte Magnetgehäuse 2 mit dem Permanentmagneten 3 und den im Zahnwurzelkanal 4 eines Zahnes 5 eingesetzten Wurzelkanalanker 6 mit einer Oberfläche 7, die als Gegenpol zum Permanentmagneten 3 dient. Ferner ist schematisch die Schleimhaut 8 eingezeichnet. Dabei wird die Zahnprothese 1 über den Permanentmagneten 3 auf der Oberfläche 7 des Ankers festgehalten.

In Figur 2 ist ein erstes Ausführungsbeispiels des Ankers und des Magnetgehäuses dargestellt. Das Magnetgehäuse 2 besteht in vorliegendem Fall aus einem Gehäuseteil 9 aus rostfreiem Stahl und einem Deckel 10 aus Titan. Zwecks besserer Verbindung zwischen dem Gehäuseteil und der Kunststoffprothese weist das Gehäuseteil Retentionskerben 11 auf. Der Deckel 10 weist einen Zentriernokken 12 auf und im Gehäuse befindet sich der Permanentmagnet 3, beispielsweise aus einer bekannten Kobalt-Sammariumlegierung.

Der Wurzelkanalanker 6 besteht aus einem Schaft 13, dessen äussere Form nach dem bekannten Stand der Tecknik ausgebildet ist und mündet in einen Kopf 14, wobei der Schaft und Kopf aus einem biokompatiblen Material gefertigt ist, beispielsweise aus Aluminiumoxydkeramik oder wie in vorliegendem Beispiel aus Titan. Der Kopf 14 weist eine Ausnehmung 15 auf, in welcher ein Einsatz 16 aus einem ferromagnetischen Material, beispielsweise ein rostfreier Stahl, eingepasst ist. Dieser Einsatz 16 kann entweder im Kopf eingepresst werden oder mit diesem verschraubt sein. Die Oberfläche des Einsatzes weist eine dem Zentriernocken 12 entsprechende Einbuchtung 17 auf. Die Erfindung ist nicht auf die vorerwähnten Materialien beschränkt. So kann der Permanentmagnet aus einer anderen geeigneten Legierung mit hoher Magnetkraft bestehen und der Deckel 10 des Magnetgehäuses kann auch aus einem geeigneten Kunststoff gefertigt sein.

Die Verwendung des oben beschriebenen Systems ist recht einfach. Nach endodontischer Vorbehandlung wird mit einem Kanaltrimmer der Wurzelkanal auf die gewünschte Einsenktiefe, respektive den gewünschten Durchmesser vorbereitet und mit Hilfe des Tiefenlehrinstrumentes wird die Kavität in der Zahnwurzel kontrolliert. Die Patrize, d.h. das Verankerungsteil wird wie ein Wurzelstift in den Wurzelkanal einzementiert. Zur Herstellung der Prothese wird als Platzhalter ein leicht konischer Messingkörper verwendet und anschliessend wird das Magnetgehäuse in die Prothesenbasis einpolimerisiert.

In einer Ausführungsvariante besteht das Kopfoberteil des Ankers aus einer Lötbasis 18, in der ein Schraubeinsatz 19 austauschbar eingeschraubt ist, wobei die Oberfläche des Schraubeinsatzes ausser der Einbuchtung 17 für den Zentriernocken 12 einen Schlitz 20 für einen Schraubenzieher aufweist. Demgemäss weist der Kopf des Ankers eine ebene Fläche auf, die der Unterseite 21 der Lötbasis entspricht, wobei die Lötbasis auf dem Kopf des Wurzelkanalankers gelötet wird. Die Lötbasis wird aus einer nicht korrodierenden Edelmetalllegierung, beispielsweise unter dem Handelsnamen Elitor bekannt, hergestellt, wobei diese Edelmetallegierung auch biokompatibel ist, d.h. vom umliegenden Gewebe nicht angegriffen, respektive korrodiert werden kann. Auch bei dieser Ausführungsvariante ist das Verfahren, das als indirektes Verfahren beschrieben werden kann, denkbar einfach. Nach endodontischer Vorbehandlung des Wurzel kanals wird nach erfolger Abformung im Labor eine Wurzelkappe gemäss den Dimensionen des Kanals hergestellt und in eine Edelmetallegierung gegossen. Dann wird diese Wurzelkappe mit einer horizontalen Fläche versehen, die denselben Durchmesser aufweist wie die Lötbasis. Dann wird ein Lötmodell hergestellt und die Lötung erfolgt in üblicher Weise mit der für dentale Lötungen vorgesehenen Materialien und Arbeitstechniken. Anschliessend wird der Schraubeinsatz als Magnetgegenpol mit dem Schraubenzieher in die verlötete Lötbasis verschraubt, so dass dieser Einsatz jederzeit ausgewechselt werden kann. Anschliessend wird der Platzhalter aufgesetzt, die Prothese hergestellt und die Polymerisation vorgenommen. Anschliessend wird das Magnetgehäuse in die Aussparung in der Prothesenbasis eingepresst oder mit einer kleinen Menge Autopolimerisat in der richtigen Lage fixiert.

## Ansprüche

1. Zahnprothese und Anker mit einen Permanentmagneten (3) enthaltende Verbindungsteile, wobei der Permanentmagnet in einem Magnetgehäuse (2) in der Prothese (1) angeordnet ist und der im Kiefer einsetzbare Anker (6) eine Oberfläche aufweist, die vom Permanentmagneten angezogen wird, dadurch gekennzeichnet, dass mindestens alle mit dem Gewebe des Kiefers in Berührung kommenden Teile (13, 14, 18) des Ankers (6) aus biokompatiblem Material gefertigt sind und die Oberfläche (16, 19) des Ankers mit einem rostfreien ferromagnetischen Metall versehen ist.

2. Zahnprothese nach Anspruch 1, dadurch gekennzeichnet, dass die biokompatiblen Teile des Ankers aus Titan, einer Edelmetall-Legierung oder Aluminium-Oxydkeramik gefertigt sind.

3. Zahnprothese nach Anspruch 1 oder 2, dadurch gekennzeichnet, dass in der Oberfläche des Ankers aus Titan ein Einsatz (16) aus rostfreiem Stahl eingelassen ist.

4. Zahnprothese nach Anspruch 1 oder 2, dadurch gekennzeichnet, dass auf dem Anker-Schaft aus Titan oder aus einer Edelmetall-Legierung eine Lötbasis (18) aufgelötet ist, in die ein Schraubeinsatz (19) lösbar befestigt ist.

5. Zahnprothese nach einem der Ansprüche 1 bis 4, dadurch gekennzeichnet, dass der ankerseitige Deckel (10) des Magnetgehäuses (2) einen Zentriernocken (12) und der Einsatz (16, 19) im Anker eine entsprechende Einbuchtung (17) aufweist.

FIG.1

FIG.2

FIG.3

EP 0 347 510 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-U-8 803 488  (BRANDAU) <br> * Anspruch 2; Seite 3, Zeilen 10 - 14; Figur * <br> --- | 1 | A 61 C   13/235 |
| A | US-A-4 693 686  (SENDAX) <br> * Anspruch 1; Spalte 7, Zeilen 31 - 52; Figur 2 * <br> --- | 1 | |
| A | DE-A-3 439 955  (SPRUNK) <br> * Ansprüche 1, 3, 5, 6; Seite 3, Zeilen 4 - 10 * <br> --- | 1 | |
| A | DE-U-8 526 459  (MORENA) <br> * Ansprüche 1, 2; Figuren 1 - 3 * <br> --- | 1, 2 | |
| A | FR-A-2 076 270  (VICAT et al.) <br> * Figuren 1, 2 * <br> ----- | 1, 5 | |

**RECHERCHIERTE SACHGEBIETE (Int. Cl.4)**

A 61 C   8/00
A 61 C   13/00

Der vorliegende Recherchenbericht wurde für alle Patentansprüche erstellt

| Recherchenort | Abschlußdatum der Recherche | Prüfer |
|---|---|---|
| BERLIN | 08-02-1989 | KANAL P K |